# EUROPÄISCHE PATENTSCHRIFT

(11) **EP 4 281 310 B1**
(45) Veröffentlichungstag und Bekanntmachung des Hinweises auf die Patenterteilung: **02.09.2026**
(21) Anmeldenummer: 22703286.9
(22) Anmeldetag: 17.01.2022
(51) Int. Cl.: B60L 53/126, B60L 53/14, B60L 55/00

(54) **VORRICHTUNG FÜR EIN ELEKTROFAHRZEUG, ELEKTROFAHRZEUG MIT EINER VORRICHTUNG UND VERFAHREN ZUM BEREITSTELLEN EINER AUFLADEENERGIE**
DEVICE FOR AN ELECTRIC VEHICLE, ELECTRIC VEHICLE HAVING A DEVICE, AND METHOD FOR PROVIDING CHARGING ENERGY
DISPOSITIF POUR VÉHICULE ÉLECTRIQUE, VÉHICULE ÉLECTRIQUE ÉQUIPÉ D'UN DISPOSITIF ET PROCÉDÉ DE FOURNITURE D'ÉNERGIE DE CHARGE

(30) Priorität: 20.01.2021 DE 102021200472
(43) Veröffentlichungstag der Anmeldung: 29.11.2023
(73) Patentinhaber: ZF Friedrichshafen AG, 88046 Friedrichshafen (DE)
(72) Erfinder: SEEMANN, Frank, 97502 Euerbach (DE); EHRSAM, Andre, 97493 Bergrheinfeld (DE); MACH, Martin, 30100 Plzen 3 (CZ); STEPAN, Zbynek, 30100 Plzen 3 (CZ); DVORAK, Vladimír, 30100 Plzen 3 (CZ); SCHERER, Gabriel, 88693 Deggenhausertal (DE); ENGICHT, Matthias, 88677 Markdorf (DE)
(74) Vertreter: ZF Friedrichshafen AG
(86) Internationale Anmeldenummer: PCT/EP2022/050841
(87) Internationale Veröffentlichungsnummer: WO 2022/157100

(56) Entgegenhaltungen:
- US-A1- 2006 250 902
- US-A1- 2015 217 656
- US-A1- 2020 324 665

## Beschreibung

Der vorliegende Ansatz bezieht sich auf eine Vorrichtung für ein Elektrofahrzeug, ein Elektrofahrzeug mit einer Vorrichtung und ein Verfahren zum Bereitstellen einer Aufladeenergie.

In der Industrie gewinnt elektrifiziertes Fahren im Zuge der Umweltfreundlichkeit immer mehr an Bedeutung mit dem Ziel, nicht nur Personenkraftwagen, sondern auch Nutzfahrzeuge elektrisch anzutreiben.

US2020/324665A1 offenbart eine Vorrichtung für ein Elektrofahrzeug.

Vor diesem Hintergrund schafft der vorliegende Ansatz eine verbesserte Vorrichtung für ein Elektrofahrzeug, ein Elektrofahrzeug mit einer verbesserten Vorrichtung und ein verbessertes Verfahren zum Bereitstellen einer Aufladeenergie gemäß den Hauptansprüchen. Vorteilhafte Ausgestaltungen ergeben sich aus den Unteransprüchen und der nachfolgenden Beschreibung.

Die mit dem vorgestellten Ansatz erreichbaren Vorteile bestehen darin, dass mittels einer in einem Elektrofahrzeug aufgenommenen Vorrichtung eine Möglichkeit geschaffen wird, ein weiteres Elektrofahrzeug mit elektrischer Energie des Elektrofahrzeugs zu versorgen.

Es wird eine Vorrichtung für ein Elektrofahrzeug vorgestellt. Die Vorrichtung ist zum Bereitstellen einer Aufladeenergie für ein weiteres Elektrofahrzeug verwendbar und weist eine Batterieschnittstelle, einen Wechselrichter, eine Schaltereinrichtung und eine Steuereinrichtung auf. Die Batterieschnittstelle ist zum Verbinden der Vorrichtung mit einer Fahrzeugbatterie des Elektrofahrzeugs ausgeformt. Der Wechselrichter weist einen ersten Anschluss zum Verbinden des Wechselrichters mit der Batterieschnittstelle und einen zweiten Anschluss zum Verbinden des Wechselrichters mit einem Schalteranschluss auf, wobei der Wechselrichter ausgebildet ist, um eine an dem ersten Anschluss anliegende Gleichspannung in eine Wechselspannung umzuwandeln und an den zweiten Anschluss bereitzustellen. Die Schaltereinrichtung weist den Schalteranschluss, der die Schaltereinrichtung mit dem zweiten Anschluss verbindet, und eine Bestromungsschnittstelle zum Bestromen des mit der Bestromungsschnittstelle gekoppelten weiteren Elektrofahrzeugs auf. Die Steuereinrichtung ist ausgebildet, um ein Aktivierungssignal an die Schaltereinrichtung auszugeben, wenn ein Begrenzungssignal keine Begrenzung anzeigt, und das Aktivierungssignal nicht auszugeben, wenn das Begrenzungssignal eine Begrenzung anzeigt, wobei das Aktivierungssignal ausgebildet ist, um den Schalteranschluss mit der Bestromungsschnittstelle zu verbinden, um die Aufladeenergie an der Bestromungsschnittstelle bereitzustellen.

Sowohl das Elektrofahrzeug als auch das weitere Elektrofahrzeug können als ein elektrifiziertes Nutzfahrzeug, beispielsweise als ein Lastwagen realisiert sein. Zumindest das weitere Elektrofahrzeug kann auch ein Personenkraftwagen sein. Die Vorrichtung kann dazu dienen, um elektrische Energie der Fahrzeugbatterie des Elektrofahrzeugs für das weiterer Elektrofahrzeug bereitzustellen, welches beispielsweise elektrische Energie benötigt. Die Aufladeenergie kann hierbei dazu dienen, um eine weitere Fahrzeugbatterie des weiteren Elektrofahrzeugs zu laden. Das Begrenzungssignal kann vorteilhafterweise zum Begrenzen einer Menge der Aufladeenergie dienen. Abhängig von dem Begrenzungssignal kann so die Aufladeenergie entweder unter Ausgabe des Aktivierungssignals bereitgestellt werden oder nicht bereitgestellt werden, wenn das Aktivierungssignal nicht ausgegeben wird. Durch das Begrenzungssignal kann verhindert werden, dass die Aufladeenergie für das weitere Elektrofahrzeug in unbegrenzter Menge zur Verfügung steht. So kann beispielsweise verhindert werden, dass die Fahrzeugbatterie des Elektrofahrzeugs stark oder vollständig entladen wird. Der Wechselrichter kann ausgebildet sein, um ansprechend auf ein Wechselrichtersignal oder automatisch bei Anliegen einer Gleichspannung an dem Wechselrichter die an dem ersten Anschluss anliegende Gleichspannung in die Wechselspannung umzuwandeln und an den zweiten Anschluss bereitzustellen. Dank der Vorrichtung kann ein Elektrofahrzeug ein anderes Elektrofahrzeug mit elektrischer Energie versorgen, um sich beispielsweise einen langen Weg zu einer Ladesäule zu sparen.

Die Steuereinrichtung kann ausgebildet sein, um das Begrenzungssignal unter Verwendung eines Ladestandsignals, das einen Batterieladestand der Fahrzeugbatterie repräsentiert, zu bestimmen. So kann die Aufladeenergie abhängig von dem Batterieladestand bereitgestellt werden, oder nicht. Wenn das Ladestandsignal beispielsweise lediglich einen geringen Batterieladestand anzeigt, kann das Begrenzungssignal die Begrenzung anzeigen, um die ohnehin wenig geladene Fahrzeugbatterie zu schonen.

Beispielsweise kann die Steuereinrichtung ausgebildet sein, um das Begrenzungssignal, das keine Begrenzung anzeigt, zu bestimmen, wenn das Ladestandsignals einen Batterieladestand der Fahrzeugbatterie repräsentiert, der über einem definierten Mindestladestand liegt. So kann die Aufladeenergie beispielsweise solange bereitgestellt werden, bis der Batterieladestand den Mindestladestand erreicht. Auf diese Weise kann sichergestellt werden, dass für den eigenen Betrieb des Elektrofahrzeugs noch genügend elektrische Energie zu Verfügung steht.

Es ist weiterhin von Vorteil, wenn die Steuereinrichtung gemäß einer Ausführungsform ausgebildet ist, um das Begrenzungssignal, das die Begrenzung anzeigt, zu bestimmen, wenn das Ladestandsignals einen Batterieladestand der Fahrzeugbatterie repräsentiert, der unter einem definierten Mindestladestand liegt. So kann die Aufladeenergie beispielsweise gestoppt werden, sobald der Batterieladestand den Mindestladestand erreicht oder unterschreitet. Dies kann eine zu starke Entladung der Fahrzeugbatterie verhindern.

Gemäß einer Ausführungsform kann die Steuereinrichtung ausgebildet sein, um den Mindestladestand abhängig von einer voraussichtlichen Beanspruchung der Fahrzeugbatterie durch einen weiteren Betrieb des Elektrofahrzeugs zu bestimmen. Für den weiteren Betrieb können beispielsweise weitere Fahrten und/oder Betriebsvorgänge für fahrzeuginterne Zusatzantriebe des Elektrofahrzeugs und/oder Aufladevorgänge für zusätzliche Elektrofahrzeuge oder Geräte vorgesehen sein. So kann der Mindestladestand derart bestimmt werden, dass das Elektrofahrzeug auch nach dem Aufladen des weiteren Elektrofahrzeugs weiterhin gemäß ihrer voraussichtlichen Beanspruchung betrieben werden kann, ohne hierzu zu wenig elektrische Energie zur Verfügung zu haben.

Die Steuereinrichtung kann ausgebildet sein, um das Begrenzungssignal abhängig von einem Vergleich eines Mengensignals, das eine definierte Maximalmenge der Aufladeenergie repräsentiert, und eines Ladesignals, das eine abgegebene Menge der Aufladeenergie repräsentiert, zu bestimmen. Auch anhand einer definierten Maximalmenge kann die Aufladeenergie für das weitere Fahrzeug vorteilhafterweise begrenzt werden. Die Steuereinrichtung kann hierbei ausgebildet sein, um das Begrenzungssignal, das die Begrenzung anzeigt, zu bestimmen, wenn die abgegebene Menge der Aufladeenergie der definierten Maximalmenge entspricht. So kann die Aufladeenergie nach Erreichen der definierten Maximalmenge gestoppt werden. Die Steuereinrichtung kann ferner ausgebildet sein, um das Begrenzungssignal, das keine Begrenzung anzeigt, zu bestimmen, wenn die abgegebene Menge der Aufladeenergie kleiner ist, als die definierte Maximalmenge. So kann die Aufladeenergie weiter bereitgestellt werden, bis beispielsweise die definierte Maximalmenge erreicht ist. Dies schafft eine Möglichkeit, die Energiemenge festzulegen, die von dem Elektrofahrzeug an das weitere Elektrofahrzeug abgegeben wird. Unter Umständen kann der Ladevorgang dadurch abgebrochen werden, obwohl die weitere Fahrzeugbatterie noch nicht vollständig geladen ist. Dies kann sinnvoll sein, um den weiteren Betrieb des Elektrofahrzeugs nicht zu gefährden oder noch weitere Elektrofahrzeuge aufladen zu können.

Beispielsweise kann die Steuereinrichtung ausgebildet sein, um das Mengensignal von einer Speichereinrichtung einzulesen. Die Speichereinrichtung kann Vorrichtungsintern oder außerhalb der Vorrichtung angeordnet sein. Entsprechend kann die Steuereinrichtung ausgebildet sein, um das Mengensignal drahtlos oder drahtgebunden von der Speichereinrichtung einzulesen. Ein Wert des Mengensignals kann dabei fest in der Speichereinrichtung hinterlegt sein oder automatisiert oder über eine Benutzerschnittstelle einstellbar sein.

Die Schaltereinrichtung kann einen ersten Schalter zum Verbinden des Schalteranschlusses mit der Bestromungsschnittstelle aufweisen. Vorteilhafterweise kann mittels des Schalters die elektrische Energie durch Herstellen einer elektrischen Verbindung auf kürzestem Weg durch die Schaltereinrichtung zu der Bestromungsschnittstelle geleitet werden. Zudem kann die Bestromungsschnittstelle unter Verwendung des ersten Schalters von dem Wechselrichter abgekoppelt werden, beispielsweise um ein nichtautorisiertes Laden des weiteren Elektrofahrzeugs zu unterbinden.

Die Schaltereinrichtung kann ausgebildet sein, um unter Verwendung des Aktivierungssignals den ersten Schalter zu schließen. Vorteilhafterweise kann dadurch elektrische Energie durch die Schaltereinrichtung geleitet werden, um die Aufladeenergie an der Bestromungsschnittstelle bereitzustellen.

Die Schaltereinrichtung kann ferner eine Ladeschnittstelle zum Einspeisen weiterer elektrischer Energie in die Vorrichtung umfassen. Zusätzlich oder alternativ kann die Schaltereinrichtung eine Zusatzschnittstelle zum Verbinden der Vorrichtung mit einem Zusatzantrieb aufweisen. Die Steuereinrichtung kann ausgebildet sein, um ein Wechselrichtersignal bereitzustellen, um eine an dem ersten Anschluss anliegende Gleichspannung in eine Wechselspannung umzuwandeln und an den zweiten Anschluss bereitzustellen. Zusätzlich oder alternativ kann die Steuereinrichtung ausgebildet sein, um ein weiteres Wechselrichtersignal bereitzustellen, um eine an der Ladeschnittstelle anliegende Wechselspannung in eine Gleichspannung umzuwandeln und an den ersten Anschluss bereitzustellen. Der Wechselrichter kann demnach als ein bidirektionaler Wechselrichter ausgeformt sein. Der Zusatzantrieb kann beispielsweise ausgebildet sein, um eine über eine Fortbewegung des Elektrofahrzeugs hinausgehende Funktionalität bereitzustellen. Beispielsweise kann der Zusatzantrieb verwendet werden, um eine Baggerschaufel oder einen Kran des Elektrofahrzeugs anzutreiben. Die Schaltereinrichtung kann beispielsweise eine Mehrzahl von Schaltern aufweisen, die beispielsweise je nach einer gewünschten Funktion geöffnet und geschlossen werden können, um beispielsweise den Zusatzantrieb und/oder die Ladeschnittstelle mit der Batterieschnittstelle elektrisch zu verbinden. Beispielsweise kann eine Zusatzfunktion des Elektrofahrzeugs, wie das Antreiben des Krans, über den Zusatzantrieb bewirkt werden. Über die Ladeschnittstelle kann beispielsweise die Fahrzeugbatterie geladen werden.

Ein Elektrofahrzeug weist eine Vorrichtung, die in einer der vorangehend beschriebenen Varianten ausgeformt ist, und die mit der Batterieschnittstelle verbundene Fahrzeugbatterie auf. Das Elektrofahrzeug kann als ein elektrifiziertes Nutzfahrzeug, beispielsweise als ein Lastwagen realisiert sein. Das Elektrofahrzeug kann ferner den mit der Zusatzschnittstelle verbundenen Zusatzantrieb aufweisen.

Es wird ferner ein Verfahren zum Bereitstellen einer Aufladeenergie für ein weiteres Elektrofahrzeug vorgestellt, wobei das Verfahren von dem vorangehend beschriebenen Elektrofahrzeug mit der Vorrichtung in einer der vorangehend beschriebenen Varianten verwendbar ist und einen Schritt des Umwandelns, einen Schritt des Verbindens und einen Schritt des Trennens aufweist. Im Schritt des Umwandelns wird eine an dem ersten Anschluss anliegende Gleichspannung in eine Wechselspannung umgewandelt und die Wechselspannung an den zweiten Anschluss bereitgestellt. Im Schritt des Verbindens wird der Schalteranschluss unter Verwendung des Aktivierungssignals, das ausgegeben wird, wenn ein Begrenzungssignal keine Begrenzung anzeigt, mit dem zweiten Anschluss und der Bestromungsschnittstelle verbunden, um die Aufladeenergie an der Bestromungsschnittstelle für das weitere Elektrofahrzeug bereitzustellen. Im Schritt des Trennens wird der Schalteranschluss von dem zweiten Anschluss und der Bestromungsschnittstelle getrennt, wenn das Begrenzungssignal eine Begrenzung anzeigt, um keine Aufladeenergie an der Bestromungsschnittstelle für das weitere Elektrofahrzeug bereitzustellen.

Dieses Verfahren kann beispielsweise in Software oder Hardware oder in einer Mischform aus Software und Hardware beispielsweise in einem Steuergerät implementiert sein.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Elektrofahrzeugs gemäß einem Ausführungsbeispiel;
Fig. 2 eine schematische Darstellung einer Vorrichtung zum Bereitstellen einer Aufladeenergie für ein weiteres Elektrofahrzeug gemäß einem Ausführungsbeispiel; und
Fig. 3 ein Ablaufdiagramm eines Verfahrens zum Bereitstellen einer Aufladeenergie für ein weiteres Elektrofahrzeug gemäß einem Ausführungsbeispiel.

In der nachfolgenden Beschreibung bevorzugter Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

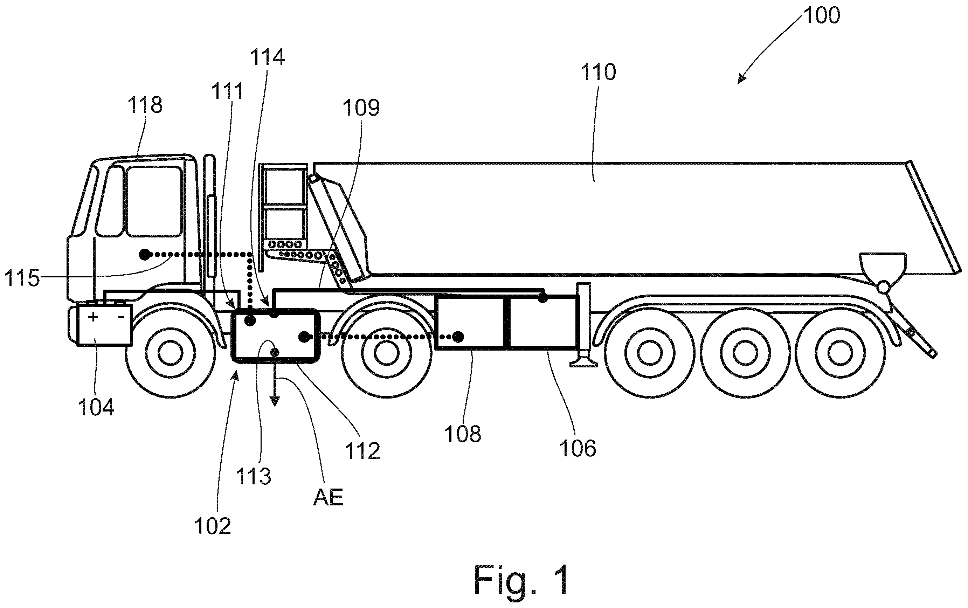

Fig. 1 zeigt eine schematische Darstellung eines Elektrofahrzeugs 100 gemäß einem Ausführungsbeispiel. Das Elektrofahrzeug 100 ist beispielsweise als ein elektrifizierter Lastkraftwagen, beispielsweise mit einer Schrotmühle oder beispielsweise einer Betonpumpe realisiert. Das Elektrofahrzeug 100 weist eine Vorrichtung 102 und eine Fahrzeugbatterie 104 und lediglich optional einen Zusatzantrieb 106 und/oder eine Hydraulikeinrichtung 108 auf. Die Vorrichtung 102 ist dabei ausgebildet, um eine Aufladeenergie AE für ein weiteres Elektrofahrzeug bereitzustellen. Optional ist die Vorrichtung 102 ferner gemäß diesem Ausführungsbeispiel ausgebildet, um eine Betriebsenergie 109 für den Zusatzantrieb 106 bereitzustellen. Gemäß einem Ausführungsbeispiel ist der Zusatzantrieb 106 ausgebildet, um die Hydraulikeinrichtung 108 anzutreiben oder zu bewegen. Die Hydraulikeinrichtung 108 ist gemäß diesem Ausführungsbeispiel als eine Hydraulikpumpe ausgeformt, die beispielsweise eine Hydraulik zum Bewegen eines Fahrzeugaufbaus 110 des Elektrofahrzeugs 100 mit Druck beaufschlagt. Die Fahrzeugbatterie 104 ist gemäß einem Ausführungsbeispiel ausgebildet, um eine Antriebsenergie für einen Antrieb zum Fortbewegen des Elektrofahrzeugs 100 bereitzustellen.

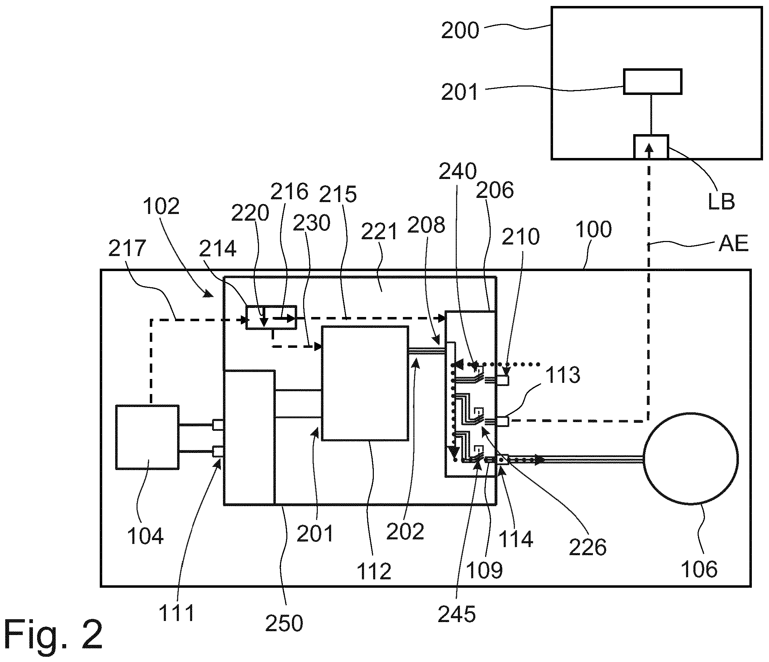

Die Vorrichtung 102, die in Fig. 2 detaillierter dargestellt ist, weist eine Batterieschnittstelle 111 auf, die ausgebildet ist, um die Vorrichtung 102 mit der Fahrzeugbatterie 104 zu verbinden. Weiterhin weist die Vorrichtung 102 einen Wechselrichter 112 auf, der einen hier nicht abgebildeten ersten Anschluss und einen zweiten Anschluss aufweist. Durch den ersten Anschluss wird der Wechselrichter 112 mit der Batterieschnittstelle 111 verbunden. Und durch den zweiten Anschluss wird der Wechselrichter 112 mit einem Schalteranschluss verbunden. Der Wechselrichter 112 ist optional bidirektional realisiert. Der Wechselrichter 112 ist ausgebildet, um eine an dem ersten Anschluss anliegende Gleichspannung in eine Wechselspannung umzuwandeln und an den zweiten Anschluss bereitzustellen. Die Umwandlung wird dabei ansprechend auf ein Wechselrichtersignal oder automatisch bei Anliegen der Gleichspannung an dem ersten Anschluss initiiert. Ebenfalls weist die Vorrichtung 102 eine hier nicht dargestellte Schaltereinrichtung mit dem Schalteranschluss und einer Bestromungsschnittstelle 113 zum Bestromen des mit der Bestromungsschnittstelle 113 gekoppelten weiteren Elektrofahrzeugs auf. Lediglich optional weist die Schaltereinrichtung gemäß diesem Ausführungsbeispiel ferner eine Zusatzschnittstelle 114 und/oder eine Ladeschnittstelle auf. Die Vorrichtung 102 weist weiterhin eine ebenfalls nicht dargestellte Steuereinrichtung auf. Die Steuereinrichtung, wie sie in Fig. 2 näher beschrieben wird, ist ausgebildet, um ein Aktivierungssignal an die Schaltereinrichtung auszugeben, wenn ein Begrenzungssignal keine Begrenzung anzeigt und das Aktivierungssignal nicht auszugeben, wenn das Begrenzungssignal eine Begrenzung anzeigt, wobei das Aktivierungssignal ausgebildet ist, um den Schalteranschluss mit der Bestromungsschnittstelle zu verbinden, um die Aufladeenergie AE an der Bestromungsschnittstelle 113 bereitzustellen.

Der Schalteranschluss ist ausgebildet, um den zweiten Anschluss des Wechselrichters 112 mit der Schaltereinrichtung zu verbinden. Über die Zusatzschnittstelle 114 wird die Vorrichtung 102 gemäß diesem Ausführungsbeispiel mit dem Zusatzantrieb 106 verbunden. Die Ladeschnittstelle ist ausgebildet, um eine weitere elektrische Energie in die Vorrichtung 102 einzuspeisen. Gemäß diesem Ausführungsbeispiel ist es beispielsweise einem Fahrer des Elektrofahrzeugs 100 möglich, unter Verwendung einer Bedieneinrichtung aus einer Fahrerkabine 118 des Elektrofahrzeugs 100 heraus, ein Bediensignal 115 bereitzustellen, das von der Steuereinrichtung der Vorrichtung 102 zum Steuern des Wechselrichters 112 und/oder der Schaltereinrichtung verwendet werden kann.

Mit der Umstellung auf elektrisch angetriebene Nutzfahrzeuge, die hier als Elektrofahrzeug 100 bezeichnet sind, ergeben sich Nebenantriebsmöglichkeiten. Aufbauer, welche Arbeitsfunktionen erstellen, benötigen beispielsweise eine neue Schnittstelle, um die Aufbauten zu betreiben. Gemäß einem Ausführungsbeispiel wird als neue Schnittstelle die Batterieschnittstelle 111 zu der Fahrzeugbatterie 104 verwendet. Um der Fahrzeugbatterie 104 Energie zu entnehmen und als Aufladeenergie AE für ein weiteres Elektrofahrzeug bereitzustellen und/oder beispielsweise um einen Drehstrommotor, der hier als Zusatzantrieb 106 bezeichnet ist, zu betreiben, ist der als Inverter bezeichenbare Wechselrichter 112 notwendig. Gemäß diesem Ausführungsbeispiel sind mittels des Zusatzantriebs 106 stationäre Arbeitsfunktionen des Elektrofahrzeugs 100 durchführbar, die beispielsweise Krane, Betonpumpen, Arbeitsplattformen oder Schrotmühlen betreffen. Es wird vor diesem Hintergrund eine multifunktionale Vorrichtung 102 vorgestellt, deren Hauptfunktion es ist, Energie von der Fahrzeugbatterie 104 zu beziehen, um eine weitere Fahrzeugbatterie eines weiteren Elektrofahrzeugs aufzuladen. Eine Nebenfunktion der Vorrichtung 102 ist es gemäß diesem Ausführungsbeispiel, die elektrische Energie in verschiedenartig andere elektrische Energieformen umzuwandeln, um Antriebe, wie beispielsweise den Zusatzantrieb 106, zu bestromen und/oder die Fahrzeugbatterie 104 über die Ladeschnittstelle aufzuladen und zu schützen. Durch den Zusatzantrieb 106 sind beispielsweise mechanische Einrichtungen, Hydraulikeinrichtungen 108 oder pneumatische Einrichtungen ansteuerbar.

In anderen Worten ausgedrückt wird vor diesem Hintergrund ein elektrifiziertes Nutzfahrzeug beschrieben, welches einen multifunktionalen Inverter aufweist, der hier als Vorrichtung 102 beschrieben ist, und ausgebildet ist, um andere Fahrzeuge zu laden. Optional wird die Vorrichtung 102 zum Betreiben zumindest einer Arbeitsfunktion des Elektrofahrzeugs 100 verwendet. Beispielsweise ermöglicht die Vorrichtung 102 die Durchführung der Arbeitsfunktion, das bedeutet das Antreiben des Zusatzantriebs 106, und optional eine Ladefunktion, durch die beispielsweise die Fahrzeugbatterie 104 aufgeladen wird.

Weiterhin optional wird eine Zusatzfunktion des Bereitstellens eines lokal abgegrenzten Stromnetzes in Form eines Microgrids für beispielsweise 230V/400V ermöglicht. Durch Verbinden der Ladeschnittstelle mit beispielsweise einer Stromquelle und der Zusatzschnittstelle 114 wird die weitere elektrische Energie gemäß einem Ausführungsbeispiel von der Stromquelle direkt an den Zusatzantrieb 106, der beispielsweise als ein Elektromotor realisiert ist, bereitgestellt, ohne dass die Fahrzeugbatterie 104, die auch als Batteriesystem bezeichnet wird, benötigt wird.

Für eine Boostfunktion wird gemäß einem Ausführungsbeispiel parallel zum Ansteuern des Zusatzantriebs 106 durch die Ladeschnittstelle zusätzlich Boostenergie aus der Fahrzeugbatterie 104 entnommen und für den Zusatzantrieb 106 bereitgestellt. Dazu ist der Wechselrichter 112 netzsynchron ausgeformt. Ein Spannungswert der an dem ersten Anschluss anliegenden Gleichspannung ist gemäß diesem Ausführungsbeispiel variabel.

Fig. 2 zeigt eine schematische Darstellung einer Vorrichtung 102 zum Bereitstellen einer Aufladeenergie AE für ein weiteres Elektrofahrzeug 200 gemäß einem Ausführungsbeispiel. Die hier dargestellte Vorrichtung 102 kann der in Fig. 1 beschriebenen Vorrichtung 102 entsprechen oder zumindest ähneln und ist demnach in einem Elektrofahrzeug 100 eingesetzt oder einsetzbar, wie es in Fig. 1 beschrieben wurde.

Zum Bereitstellen der Aufladeenergie AE für das weitere Elektrofahrzeug 200 ist die Bestromungsschnittstelle 113 gemäß diesem Ausführungsbeispiel mit einer Ladebuchse LB des weiteren Elektrofahrzeugs 200 elektrisch verbunden, beispielsweise über ein Verbindungskabel und/oder einen Steckanschluss. Die Ladebuchse LB ist gemäß einem Ausführungsbeispiel zur Aufnahme eines Steckers zur Einspeisung von Dreiphasenwechselstrom ausgeformt. Über die Ladebuchse LB kann eine weitere Fahrzeugbatterie 201 des weiteren Elektrofahrzeugs 200 geladen werden.

Somit lässt sich die in dem Elektrofahrzeug 100 verbaute Vorrichtung 102 verwenden, um die weitere Fahrzeugbatterie 201 des weiteren Elektrofahrzeugs 200 unter Verwendung der von der Fahrzeugbatterie 104 des Elektrofahrzeugs 100 bereitgestellten Energie aufzuladen.

Gezeigt sind in Fig. 2 ferner die Batterieschnittstelle 111, der Wechselrichter 112 mit dem ersten Anschluss 201 und dem zweiten Anschluss 202, ferner die Schaltereinrichtung 206 mit dem Schalteranschluss 208, der Bestromungsschnittstelle 113 sowie der optionalen Zusatzschnittstelle 114 und der optionalen Ladeschnittstelle 210. Ferner ist die Steuereinrichtung 214 gezeigt.

Die Batterieschnittstelle 111 ist gemäß diesem Ausführungsbeispiel mit der Fahrzeugbatterie 104 des Elektrofahrzeugs 100 elektrisch verbunden. Der erste Anschluss 201 ist gemäß diesem Ausführungsbeispiel mit der Batterieschnittstelle 111 und der zweite Anschluss 202 mit dem Schalteranschluss 208 elektrisch verbunden.

Die Steuereinrichtung 214 ist ausgebildet, um das Aktivierungssignal 215 an die Schaltereinrichtung 206 auszugeben, wenn das Begrenzungssignal 216 keine Begrenzung anzeigt, und das Aktivierungssignal 215 nicht auszugeben, wenn das Begrenzungssignal 216 eine Begrenzung anzeigt, wobei das Aktivierungssignal 215 ausgebildet ist, um den Schalteranschluss 208 mit der Bestromungsschnittstelle 113 zu verbinden, um die Aufladeenergie AE an der Bestromungsschnittstelle 113 bereitzustellen. Gemäß einem Ausführungsbeispiel ist der Wechselrichter 112 dazu ausgeformt um die von der Fahrzeugbatterie 104 bereitgestellte Gleichspannung in eine Dreiphasenwechselspannung zu wandeln, die dann über die Schaltereinrichtung 206 an der Bestromungsschnittstelle 113 bereitgestellt werden kann.

Die Vorrichtung 102 dient gemäß einem Ausführungsbeispiel dazu, um elektrische Energie der Fahrzeugbatterie 104 des Elektrofahrzeugs 100 für das weitere Elektrofahrzeug 200 bereitzustellen, welches beispielsweise elektrische Energie benötigt. Die Aufladeenergie AE dient gemäß einem Ausführungsbeispiel dazu, um die weitere Fahrzeugbatterie 201 des weiteren Elektrofahrzeugs 200 zu laden. Die Steuereinrichtung 214 ist gemäß diesem Ausführungsbeispiel ausgebildet, um das Begrenzungssignal 216 unter Verwendung eines Ladestandsignals 217, das einen Batterieladestand der Fahrzeugbatterie 104 repräsentiert, zu bestimmen. Hierbei ist die Steuereinrichtung 214 gemäß diesem Ausführungsbeispiel ausgebildet, um das Begrenzungssignal 216, das keine Begrenzung anzeigt, zu bestimmen, wenn das Ladestandsignal 217 einen Batterieladestand der Fahrzeugbatterie 104 repräsentiert, der über einem definierten Mindestladestand liegt. So wird die Aufladeenergie AE gemäß einem Ausführungsbeispiel solange bereitgestellt, bis der Batterieladestand den Mindestladestand erreicht. Danach wird die Bereitstellung der Aufladeenergie AE unterbrochen, um die Fahrzeugbatterie 104 nicht tiefer als vorgesehen zu entladen. Entsprechend ist die Steuereinrichtung 214 gemäß diesem Ausführungsbeispiel ausgebildet, um das Begrenzungssignal 216, das die Begrenzung anzeigt, zu bestimmen, wenn das Ladestandsignal 217 einen Batterieladestand der Fahrzeugbatterie 104 repräsentiert, der unter dem definierten Mindestladestand liegt. So wird die Aufladeenergie AE gemäß einem Ausführungsbeispiel gestoppt, sobald der Batterieladestand den Mindestladestand erreicht oder unterschreitet, um beispielsweise eine zu starke Entladung der Fahrzeugbatterie 104 zu verhindern. Gemäß einem Ausführungsbeispiel wird der Batterieladestand der Fahrzeugbatterie 104 unter Verwendung einer geeigneten Messeinrichtung erfasst und bereitgestellt.

Gemäß einem Ausführungsbeispiel ist die Steuereinrichtung 214 ausgebildet, um den Mindestladestand abhängig von einer voraussichtlichen Beanspruchung der Fahrzeugbatterie 104 durch einen weiteren Betrieb des Elektrofahrzeugs 100 zu bestimmen. Für den weiteren Betrieb sind beispielsweise weitere Fahrten und/oder Betriebsvorgänge für fahrzeuginterne Zusatzantriebe 106 des Elektrofahrzeugs 100 und/oder Aufladevorgänge für zusätzliche Elektrofahrzeuge oder Geräte vorgesehen. Beispielsweise wird eine der voraussichtlichen Beanspruchung entsprechende Energiemenge unter Verwendung einer Schätzeinrichtung abgeschätzt und zum Festlegen des Mindestladestands verwendet. Informationen über die voraussichtliche Beanspruchung werden beispielsweise automatisiert oder durch eine Eingabe eines Bedieners über eine Bedienerschnittstelle bereitgestellt.

Gemäß einem alternativen Ausführungsbeispiel ist die Steuereinrichtung 214 ausgebildet, um den Mindestladestand von einer Speichereinrichtung einzulesen. Ein Wert des Mindestladestands kann in der Speichereinrichtung fest eingespeichert sein oder einstellbar sein. Beispielsweise kann der Wert des Mindestladestands angepasst werden, wenn eine aktualisierte Informationen über die voraussichtliche Beanspruchung zu einer Änderung des Mindestladestands führt. Die Speichereinrichtung kann vorrichtungsintern oder außerhalb der Vorrichtung 102 angeordnet sein. Entsprechend kann die Steuereinrichtung 214 ausgebildet sein, um den Mindestladestand in Form eines Signals drahtlos oder drahtgebunden von der Speichereinrichtung einzulesen.

Die Steuereinrichtung 214 ist gemäß einem weiteren Ausführungsbeispiel ausgebildet, um das Begrenzungssignal 216 abhängig von einem Vergleich eines Mengensignals 220, das eine definierte Maximalmenge der Aufladeenergie AE repräsentiert, und eines Ladesignals 221, das eine abgegebene Menge der Aufladeenergie AE repräsentiert, zu bestimmen. Die Steuereinrichtung 214 ist hierbei gemäß einem Ausführungsbeispiel ausgebildet, um das Begrenzungssignal 216, das die Begrenzung anzeigt, zu bestimmen, wenn die abgegebene Menge der Aufladeenergie AE der definierten Maximalmenge entspricht. Die Steuereinrichtung 214 ist ferner gemäß einem Ausführungsbeispiel ausgebildet, um das Begrenzungssignal 216, das keine Begrenzung anzeigt, zu bestimmen, wenn die abgegebene Menge der Aufladeenergie AE kleiner ist, als die definierte Maximalmenge. So wird die Aufladeenergie AE gemäß einem Ausführungsbeispiel solange bereitgestellt, bis beispielsweise die definierte Maximalmenge erreicht ist und/oder es wird die Aufladeenergie AE nach Erreichen der definierten Maximalmenge gestoppt. Die Steuereinrichtung 214 ist gemäß einem Ausführungsbeispiel ausgebildet, um das Mengensignal 220 von einer Speichereinrichtung einzulesen. Die Speichereinrichtung kann Vorrichtungsintern oder außerhalb der Vorrichtung 102 angeordnet sein. Entsprechend kann die Steuereinrichtung 214 ausgebildet sein, um das Mengensignal 220 drahtlos oder drahtgebunden von der Speichereinrichtung einzulesen. Ein Wert der definierte Maximalmenge kann in der Speichereinrichtung fest eingespeichert sein oder automatisiert oder über eine Bedienerschnittstelle eingestellt werden.

Die Schaltereinrichtung 206 weist gemäß diesem Ausführungsbeispiel einen ersten Schalter 226 zum Verbinden des Schalteranschlusses 208 mit der Bestromungsschnittstelle 113 auf. Die Schaltereinrichtung 206 ist gemäß diesem Ausführungsbeispiel ausgebildet, um unter Verwendung des Aktivierungssignals 215 den ersten Schalter 226 zu schließen, um die Aufladeenergie AE an der Bestromungsschnittstelle 113 bereitzustellen. Die Schaltereinrichtung 206 ist ferner gemäß diesem Ausführungsbeispiel ausgebildet, um ohne anliegendes Aktivierungssignals 215 den ersten Schalter 226 zu öffnen, um die Aufladeenergie AE nicht an der Bestromungsschnittstelle 113 bereitzustellen. Die Steuereinrichtung 214 ist gemäß einem alternativen Ausführungsbeispiel ausgebildet, um ein Deaktivierungssignal auszugeben, das ausgebildet ist, um den ersten Schalter 226 zu öffnen, um die Aufladeenergie AE nicht an der Bestromungsschnittstelle 113 bereitzustellen, wenn das Begrenzungssignal 216 die Begrenzung anzeigt. Unter Verwendung der Schaltereinrichtung 206 kann somit eine Abgabe der Aufladeenergie AE gesteuert werden.

Die Schaltereinrichtung 206 weist gemäß diesem Ausführungsbeispiel ferner die Ladeschnittstelle 210 zum Einspeisen weiterer elektrischer Energie 227 in die Vorrichtung 102 und/oder die Zusatzschnittstelle 114 zum Verbinden der Vorrichtung 102 mit dem Zusatzantrieb 106 auf, wobei die Steuereinrichtung 214 ausgebildet ist, um ein Wechselrichtersignal 230 bereitzustellen, um eine an dem ersten Anschluss 201 anliegende Gleichspannung in eine Wechselspannung umzuwandeln und an den zweiten Anschluss 202 bereitzustellen und/oder ein weiteres Wechselrichtersignal 235 bereitzustellen, um eine an der Ladeschnittstelle 210 anliegende Wechselspannung in eine Gleichspannung umzuwandeln und an den ersten Anschluss 201 bereitzustellen.

Die Schaltereinrichtung 206 weist gemäß diesem Ausführungsbeispiel ferner einen zweiten Schalter 240 und einen dritten Schalter 245 auf, die beispielsweise je nach einer gewünschten Funktion unter Verwendung des Aktivierungssignals 215 oder eines anderen Signals geschlossen und unter Verwendung eines weiteren anderen Signals geöffnet werden können, um beispielsweise den Zusatzantrieb 106 und/oder die Ladeschnittstelle 210 mit der Batterieschnittstelle 111 elektrisch zu verbinden. Gemäß einem Ausführungsbeispiel wird eine Zusatzfunktion des Elektrofahrzeugs 100, wie das Antreiben des Krans, über den Zusatzantrieb 106 bewirkt. Optional sind der Wechselrichter 112, die Schaltereinrichtung 206 und die Steuereinrichtung 214 in einem gemeinsamen Gehäuse 250 angeordnet.

Die hier vorgestellte Vorrichtung 102, die auch als "Multifunktionale Invertereinheit" oder kurz "PDU", bezeichnet werden kann, realisiert die Funktion einer Konvertierung von elektrischer Energie in andere Formen von elektrischer Energie. Hierbei ist die Vorrichtung 102 gemäß einem Ausführungsbeispiel als Stromlieferant für den Zusatzantrieb 106, der ein Drehstrommotor sein kann, einsetzbar. Ferner ist die Vorrichtung 102 gemäß einem Ausführungsbeispiel einsetzbar, um einen Wechselspannung-Ladevorgang für die Fahrzeugbatterie 104 durchzuführen. Unter Verwendung der Vorrichtung 102 wird ferner gemäß einem Ausführungsbeispiel die Fahrzeugbatterie 104 geschützt. Die Vorrichtung 102 dient gemäß einem Ausführungsbeispiel weiterhin als Kontrollsystem und ermöglicht ein Energiemanagement. Die Vorrichtung 102 ermöglicht gemäß einem Ausführungsbeispiel ein Stromnetz, auch englisch "Power to grid" genannt. Die Vorrichtung 102 dient gemäß einem Ausführungsbeispiel als Verbindungsschnittstelle zu Fahrzeugfunktionen, beispielsweise einem Fahrassistenzsystem (ADAS).

Der optionale Zusatzantrieb 106, der auch englisch als "Power to work application", oder kurz "PTO Drive", bezeichnet werden kann, realisiert gemäß einem Ausführungsbeispiel für einen Silokompressor oder eine Förderschnecke die Funktion, elektrische Energie in mechanische Energie umzuwandeln. Gemäß einem alternativen Ausführungsbeispiel realisiert der Zusatzantrieb 106 für einen Kipper oder Kran die Funktion, elektrische Energie in hydraulische Energie umzuwandeln. Gemäß einem alternativen Ausführungsbeispiel realisiert der Zusatzantrieb 106 für einen Luftkompressor die Funktion, elektrische Energie in pneumatische Energie umzuwandeln.

Elektrisch fahrende Nutzfahrzeuge wie das hier gezeigte Elektrofahrzeug 100 oder das weitere Elektrofahrzeug 200 haben in der Regel Batteriegrößen, die auf ihren Arbeitseinsatz abgestimmt sind. Die Fahrzeugbatterie 104 wird nicht größer gewählt als sie sein muss, da sie sehr teuer ist. Bei außergewöhnlichen Randbedingungen wie beispielsweise niedrigen Temperaturen oder sonstigen Randbedingungen, die dem Elektrofahrzeug 100 oder weiteren Elektrofahrzeug 200 mehr Leistung abfordern, könnte die Batteriekapazität der jeweiligen Batterie nicht ausreichen für einen Arbeitszyklus, beispielsweise eine Schicht, und es ist notwendig, die Batterie zwischenzuladen. Hierzu wird eine erreichbare Ladesäule benötigt. Da viele spezielle Nutzfahrzeuge in ländlichen Regionen eingesetzt werden, könnte es hier zu Verfügbarkeitsproblemen kommen, da die Ladesäulendicht hier geringer ist.

Die hier vorgestellte Vorrichtung 102 ermöglicht es nun vorteilhafterweise, dass wenn ein Fahrzeug, hier das weitere Elektrofahrzeug 200, eine zu niedrige Batteriekapazität aufweist und nicht mehr zur nächsten Ladesäule kommt oder seine Arbeit unterbrechen müsste, ein anderes Fahrzeug, hier das Elektrofahrzeug 100, mit überschüssiger Batteriekapazität das weitere Elektrofahrzeug 200 lädt. Der multifunktionale Inverter ist also verwendbar, um andere Fahrzeuge bei einem Vehicle-to-Vehicle-Ladevorgang zu laden. Gemäß einem Ausführungsbeispiel wird per Software die Energiemenge begrenzt, die vom Elektrofahrzeug 100 an das weitere Elektrofahrzeug 200 abgegeben wird.

In einem Anwendungsbeispiel wird unter Verwendung der Vorrichtung 102 eine Arbeitsfunktion des Elektrofahrzeugs 100 unter Verwendung beispielsweise des Zusatzantriebs 106 betrieben, die Fahrzeugbatterie 104 über die Ladeschnittstelle 210 geladen und/oder ein Microgrid aufgebaut, wobei die Vorrichtung 102 zusätzlich die Funktion hat, andere Fahrzeuge wie das weitere Elektrofahrzeug 200 über die Bestromungsschnittstelle 113 zu laden (Wechselstrom AC) und dies auch mit der Steuereinrichtung 214 steuern/regeln kann.

Gemäß diesem Ausführungsbeispiel ist die Bestromungsschnittstelle 113 ausgebildet, um die Aufladeenergie AE von innerhalb eines Toleranzbereichs von 15 % Abweichung 400 Volt bis 600 Volt Wechselspannung, beispielsweise innerhalb eines Toleranzbereichs von 10 % Abweichung in einem Frequenzbereich von 50 Hertz bis 60 Hertz, bereitzustellen. Gemäß einem alternativen Ausführungsbeispiel ist die Bestromungsschnittstelle 113 ausgebildet, um die Aufladeenergie AE von innerhalb eines Toleranzbereichs von 15 % Abweichung 230 Volt Wechselspannung, beispielsweise innerhalb eines Toleranzbereichs von 10 % Abweichung in einem Frequenzbereich von 50 Hertz bis 60 Hertz, bereitzustellen. Die Ladeschnittstelle 210 weist gemäß einem Ausführungsbeispiel eine weitere Ladebuchse auf, die zur Aufnahme eines Steckers zur Einspeisung von Dreiphasenwechselstrom ausgeformt ist.

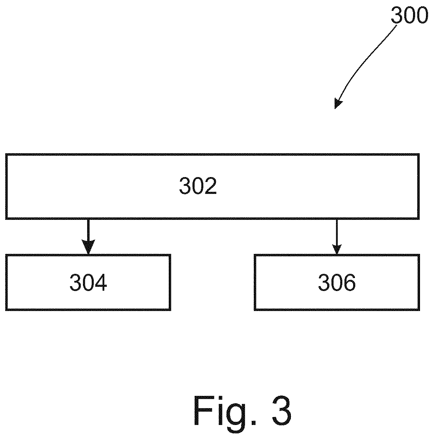

Fig. 3 zeigt ein Ablaufdiagramm eines Verfahrens 300 zum Bereitstellen einer Aufladeenergie für ein weiteres Elektrofahrzeug gemäß einem Ausführungsbeispiel.

Das Verfahren 300 ist von dem in Fig. 1 oder 2 beschriebenen Elektrofahrzeug mit der Vorrichtung in einer der in Fig. 1 oder 2 beschriebenen Varianten verwendbar und weist einen Schritt 302 des Umwandelns, einen Schritt 304 des Verbindens und einen Schritt 306 des Trennens aufweist. Im Schritt 302 des Umwandelns wird eine an dem ersten Anschluss anliegende Gleichspannung in eine Wechselspannung umgewandelt und die Wechselspannung an den zweiten Anschluss bereitgestellt. Im Schritt 304 des Verbindens wird der Schalteranschluss unter Verwendung des Aktivierungssignals, das ausgegeben wird, wenn ein Begrenzungssignal keine Begrenzung anzeigt, mit dem zweiten Anschluss und der Bestromungsschnittstelle verbunden, um die Aufladeenergie an der Bestromungsschnittstelle für das weitere Elektrofahrzeug bereitzustellen. Im Schritt 306 des Trennens wird der Schalteranschluss von dem zweiten Anschluss und der Bestromungsschnittstelle getrennt, wenn das Begrenzungssignal eine Begrenzung anzeigt, um keine Aufladeenergie an der Bestromungsschnittstelle für das weitere Elektrofahrzeug bereitzustellen.

### Bezugszeichen

- AE: Aufladeenergie
- LB: Ladebuchse

- 100: Elektrofahrzeug
- 102: Vorrichtung
- 104: Fahrzeugbatterie
- 106: Zusatzantrieb
- 108: Hydraulikeinrichtung
- 109: Betriebsenergie
- 110: Fahrzeuganhänger
- 111: Batterieschnittstelle
- 112: Wechselrichter
- 113: Bestromungsschnittstelle
- 114: Zusatzschnittstelle
- 115: Bediensignal
- 118: Fahrerkabine

- 200: weiteres Elektrofahrzeug
- 201: erster Anschluss
- 202: zweiter Anschluss
- 206: Schaltereinrichtung
- 208: Schalteranschluss
- 210: Ladeschnittstelle
- 214: Steuereinrichtung
- 215: Aktivierungssignal
- 216: Begrenzungssignal
- 217: Ladestandsignal
- 220: Mengensignal
- 221: Ladesignal
- 226: erster Schalter
- 227: weitere elektrische Energie
- 230: Wechselrichtersignal
- 235: weiteres Wechselrichtersignal
- 240: zweiter Schalter
- 245: dritter Schalter
- 250: Gehäuse

- 300: Verfahren zum Bereitstellen einer Aufladeenergie für ein weiteres Elektrofahrzeug
- 302: Schritt des Umwandelns
- 304: Schritt des Verbindens
- 306: Schritt des Trennens

## Patentansprüche

1. Vorrichtung (102) für ein Elektrofahrzeug (100), wobei die Vorrichtung (102) zum Bereitstellen einer Aufladeenergie (AE) für ein weiteres Elektrofahrzeug (200) verwendbar ist und die folgenden Merkmale aufweist:
eine Batterieschnittstelle (111) zum Verbinden der Vorrichtung (102) mit einer Fahrzeugbatterie (104) des Elektrofahrzeugs (100);
einen Wechselrichter (112) mit einem ersten Anschluss (201) zum Verbinden des Wechselrichters (112) mit der Batterieschnittstelle (111) und einem zweiten Anschluss (202) zum Verbinden des Wechselrichters (112) mit einem Schalteranschluss (208), wobei der Wechselrichter (112) ausgebildet ist, um eine an dem ersten Anschluss (201) anliegende Gleichspannung in eine Wechselspannung umzuwandeln und an den zweiten Anschluss (202) bereitzustellen;
eine Schaltereinrichtung (206) mit dem Schalteranschluss (208), der die Schaltereinrichtung (206) mit dem zweiten Anschluss (202) verbindet, und mit einer Bestromungsschnittstelle (113) zum Bestromen des mit der Bestromungsschnittstelle (113) gekoppelten weiteren Elektrofahrzeugs (200);
eine Steuereinrichtung (214), die ausgebildet ist, um ein Aktivierungssignal (215) an die Schaltereinrichtung (206) auszugeben, wenn ein Begrenzungssignal (216) keine Begrenzung anzeigt und das Aktivierungssignal nicht auszugeben, wenn das Begrenzungssignal (216) eine Begrenzung anzeigt, wobei das Aktivierungssignal (215) ausgebildet ist, um den Schalteranschluss (208) mit der Bestromungsschnittstelle (113) zu verbinden, um die Aufladeenergie (AE) an der Bestromungsschnittstelle (113) bereitzustellen, wobei die Steuereinrichtung (214) ausgebildet ist, um das Begrenzungssignal (216) abhängig von einem Vergleich eines Mengensignals (220), das eine definierte Maximalmenge der Aufladeenergie repräsentiert, und eines Ladesignals (221), das eine abgegebene Menge der Aufladeenergie repräsentiert, zu bestimmen, um die Aufladeenergie (AE) nach Erreichen der definierten Maximalmenge zu stoppen; und
eine Zusatzschnittstelle (114) zum Verbinden der Vorrichtung (102) mit einem Zusatzantrieb (106), der ausgebildet ist, um eine über eine Fortbewegung des Elektrofahrzeugs hinausgehende Funktionalität bereitzustellen.

2. Vorrichtung (102) gemäß Anspruch 1, wobei die Steuereinrichtung (214) ausgebildet ist, um das Begrenzungssignal (216) unter Verwendung eines Ladestandsignals (217), das einen Batterieladestand der Fahrzeugbatterie (104) repräsentiert, zu bestimmen.

3. Vorrichtung (102) gemäß Anspruch 2, wobei die Steuereinrichtung (214) ausgebildet ist, um das Begrenzungssignal (216), das keine Begrenzung anzeigt, zu bestimmen, wenn das Ladestandsignals (217) einen Batterieladestand der Fahrzeugbatterie (104) repräsentiert, der über einem definierten Mindestladestand liegt.

4. Vorrichtung (102) gemäß Anspruch 2 oder 3, wobei die Steuereinrichtung (214) ausgebildet ist, um das Begrenzungssignal (216), das die Begrenzung anzeigt, zu bestimmen, wenn das Ladestandsignals (217) einen Batterieladestand der Fahrzeugbatterie (104) repräsentiert, der unter einem definierten Mindestladestand liegt.

5. Vorrichtung (102) gemäß Anspruch 3 oder 4, wobei die Steuereinrichtung (214) ausgebildet ist, um den Mindestladestand abhängig von einer voraussichtlichen Beanspruchung der Fahrzeugbatterie (104) durch einen weiteren Betrieb des Elektrofahrzeugs (100) zu bestimmen.

6. Vorrichtung (102) gemäß einem der vorangegangenen Ansprüche, wobei die Steuereinrichtung (214) ausgebildet ist, um das Mengensignal (220) von einer Speichereinrichtung einzulesen.

7. Vorrichtung (102) gemäß einem der vorangegangenen Ansprüche, wobei die Schaltereinrichtung (206) einen ersten Schalter (226) zum Verbinden des Schalteranschlusses (208) mit der Bestromungsschnittstelle (113) aufweist und wobei die Schaltereinrichtung (206) ausgebildet ist, um unter Verwendung des Aktivierungssignals (215) den ersten Schalter (226) zu schließen.

8. Vorrichtung (102) gemäß einem der vorangegangenen Ansprüche, bei der die Schaltereinrichtung (206) ferner eine Ladeschnittstelle (210) zum Einspeisen elektrischer Energie (212) in die Vorrichtung (102), wobei die Steuereinrichtung (214) ausgebildet ist, um ein Wechselrichtersignal (230) bereitzustellen, um eine an dem ersten Anschluss (201) anliegende Gleichspannung in eine Wechselspannung umzuwandeln und an den zweiten Anschluss (202) bereitzustellen und/oder ein weiteres Wechselrichtersignal (235) bereitzustellen, um eine an der Ladeschnittstelle (210) anliegende Wechselspannung in eine Gleichspannung umzuwandeln und an den ersten Anschluss (201) bereitzustellen.

9. Elektrofahrzeug (100) mit einer Vorrichtung (102) gemäß einem der vorangegangenen Ansprüche und der mit der Batterieschnittstelle (111) verbundenen Fahrzeugbatterie (104).

10. Verfahren (300) zum Bereitstellen einer Aufladeenergie (AE) für ein weiteres Elektrofahrzeug (200), wobei das Verfahren (300) von einem Elektrofahrzeug (100) gemäß Anspruch 9 mit einer Vorrichtung (102) gemäß einem der Ansprüche 1 bis 8 verwendbar ist und die folgenden Schritte umfasst:
Umwandeln (302) einer an dem ersten Anschluss (201) anliegenden Gleichspannung in eine Wechselspannung und Bereitstellen der Wechselspannung an den zweiten Anschluss (202);
Verbinden (304) des Schalteranschlusses (208) unter Verwendung des Aktivierungssignals (205), das ausgegeben wird, wenn ein Begrenzungssignal (216) keine Begrenzung anzeigt, mit dem zweiten Anschluss (202) und der Bestromungsschnittstelle (113), um die Aufladeenergie (AE) an der Bestromungsschnittstelle (113) für das weitere Elektrofahrzeug (200) bereitzustellen (113), und
Trennen (306) des Schalteranschlusses (208) von dem zweiten Anschluss (202) und der Bestromungsschnittstelle (113), wenn das Begrenzungssignal (216) eine Begrenzung anzeigt, um keine Aufladeenergie (AE) an der Bestromungsschnittstelle (113) für das weitere Elektrofahrzeug (200) bereitzustellen.

11. Verwendung einer in einem Elektrofahrzeug (100) angeordneten Vorrichtung (102) gemäß einem der Ansprüche 1 bis 8 zum Bereitstellen einer Aufladeenergie (AE) zum Aufladen einer weiteren Fahrzeugbatterie (201) eines weiteren Elektrofahrzeugs (200).

## Claims

1. Apparatus (102) for an electric vehicle (100), wherein the apparatus (102) can be used to provide charging energy (AE) for a further electric vehicle (200) and has the following features:
a battery interface (111) for connecting the apparatus (102) to a vehicle battery (104) of the electric vehicle (100);
an inverter (112) having a first connection (201) for connecting the inverter (112) to the battery interface (111) and a second connection (202) for connecting the inverter (112) to a switch connection (208), wherein the inverter (112) is designed to convert a DC voltage applied to the first connection (201) to an AC voltage and to supply same to the second connection (202);
a switch device (206) having the switch connection (208) which connects the switch device (206) to the second connection (202) and having an energization interface (113) for energizing the further electric vehicle (200) coupled to the energization interface (113);
a control device (214) designed to output an activation signal (215) to the switch device (206) when a limit signal (216) indicates no limit and not to output the activation signal when the limit signal (216) indicates a limit, wherein the activation signal (215) is designed to connect the switch connection (208) to the energization interface (113) in order to provide the charging energy (AE) at the energization interface (113), wherein the control device (214) is designed to determine the limit signal (216) on the basis of a comparison of a quantity signal (220) representing a defined maximum quantity of the charging energy and a charging signal (221) representing a delivered quantity of the charging energy in order to stop the charging energy (AE) after the defined maximum quantity has been reached; and
an additional interface (114) for connecting the apparatus (102) to an additional drive (106) designed to provide functionality that goes beyond travel of the electric vehicle.

2. Apparatus (102) according to Claim 1, wherein the control device (214) is designed to determine the limit signal (216) using a state of charge signal (217) representing a battery state of charge of the vehicle battery (104).

3. Apparatus (102) according to Claim 2, wherein the control device (214) is designed to determine the limit signal (216) which indicates no limit if the state of charge signal (217) represents a battery state of charge of the vehicle battery (104) which lies above a defined minimum state of charge.

4. Apparatus (102) according to Claim 2 or 3, wherein the control device (214) is designed to determine the limit signal (216) which indicates the limit if the state of charge signal (217) represents a battery state of charge of the vehicle battery (104) which lies below a defined minimum state of charge.

5. Apparatus (102) according to Claim 3 or 4, wherein the control device (214) is designed to determine the minimum state of charge depending on a probable loading of the vehicle battery (104) as a result of further operation of the electric vehicle (100).

6. Apparatus (102) according to one of the preceding claims, wherein the control device (214) is designed to read in the quantity signal (220) from a memory device.

7. Apparatus (102) according to one of the preceding claims, wherein the switch device (206) has a first switch (226) for connecting the switch connection (208) to the energization interface (113), and wherein the switch device (206) is designed to close the first switch (226) using the activation signal (215).

8. Apparatus (102) according to one of the preceding claims, in which the switch device (206) furthermore has a charging interface (210) for feeding electrical energy (212) into the apparatus (102), wherein the control device (214) is designed to provide an inverter signal (230) in order to convert a DC voltage applied to the first connection (201) to an AC voltage and to provide same to the second connection (202) and/or to provide a further inverter signal (235) in order to convert an AC voltage applied to the charging interface (210) to a DC voltage and to provide same to the first connection (201).

9. Electric vehicle (100) having an apparatus (102) according to one of the preceding claims and the vehicle battery (104) connected to the battery interface (111).

10. Method (300) for providing charging energy (AE) for a further electric vehicle (200), wherein the method (300) can be used by an electric vehicle (100) according to Claim 9 having an apparatus (102) according to one of Claims 1 to 8 and comprises the following steps:
converting (302) a DC voltage applied to the first connection (201) to an AC voltage and supplying the AC voltage at the second connection (202);
connecting (304) the switch connection (208) to the second connection (202) and the energization interface (113) using the activation signal (205) which is output when a limit signal (216) indicates no limit in order to provide (113) the charging energy (AE) at the energization interface (113) for the further electric vehicle (200), and
disconnecting (306) the switch connection (208) from the second connection (202) and the energization interface (113) if the limit signal (216) indicates a limit in order not to provide charging energy (AE) at the energization interface (113) for the further electric vehicle (200).

11. Use of an apparatus (102) according to one of Claims 1 to 8, arranged in an electric vehicle (100), for providing charging energy (AE) for charging a further vehicle battery (201) of a further electric vehicle (200).

## Revendications

1. Dispositif (102) pour un véhicule électrique (100), le dispositif (102) pouvant être utilisé pour fournir une énergie de charge (AE) pour un autre véhicule électrique (200) et comportant les caractéristiques suivantes :
une interface batterie (111) pour la connexion du dispositif (102) à une batterie (104) de véhicule du véhicule électrique (100),
un onduleur (112) avec une première borne (201) pour connecter l'onduleur (112) à l'interface batterie (111) et une deuxième borne (202) pour connecter l'onduleur (112) à une borne d'interrupteur (208), l'onduleur (112) étant formé pour convertir une tension continue appliquée sur la première borne (201) en une tension alternative et pour la fournir à la deuxième borne (202) ;
un système d'interrupteur (206) avec la borne d'interrupteur (208), qui connecte le système d'interrupteur (206) à la deuxième borne (202), et avec une interface d'alimentation en courant (113) pour alimenter en courant l'autre véhicule électrique (200) couplé à l'interface d'alimentation en courant (113),
un système de commande (214), qui est formé pour délivrer un signal d'activation (215) au système d'interrupteur (206) lorsqu'un signal de limitation (216) n'indique pas de limitation, et pour ne pas délivrer le signal d'activation lorsque le signal de limitation (216) indique une limitation, le signal d'activation (215) étant formé pour connecter la borne d'interrupteur (208) à l'interface d'alimentation en courant (113) pour fournir l'énergie de charge (AE) à l'interface d'alimentation en courant (113), le système de commande (214) étant formé pour définir le signal de limitation (216) en fonction d'une comparaison d'un signal de quantité (220), qui représente une quantité maximale définir de l'énergie de charge, et d'un signal de charge (221), qui représente une quantité de sortie de l'énergie de charge, pour arrêter l'énergie de charge (AE) après avoir atteint la quantité maximale définie ; et
une interface supplémentaire (114) permettant de connecter le dispositif (102) à un entraînement supplémentaire (106) pour fournir une fonctionnalité au-delà d'un déplacement du véhicule électrique.

2. Dispositif (102) selon la revendication 1, le système de commande (214) étant formé pour définir le signal de limitation (216) en utilisant un signal de niveau de charge (217), qui représente un niveau de charge de batterie de la batterie (104) de véhicule.

3. Dispositif (102) selon la revendication 2, le système de commande (214) étant formé pour définir le signal de limitation (216), qui n'indique aucune limitation, lorsque le signal de niveau de charge (217) représente un niveau de charge de batterie de la batterie (104) de véhicule, qui est supérieur à un niveau de charge minimum défini.

4. Dispositif (102) selon la revendication 2 ou 3, le système de commande (214) étant formé pour définir le signal de limitation (216), qui indique la limitation, lorsque le signal de niveau de charge (217) représente un niveau de charge de batterie de la batterie (104) de véhicule, qui est inférieur à un niveau de charge minimum défini.

5. Dispositif (102) selon la revendication 3 ou 4, le système de commande (214) étant formé pour définir le niveau de charge minimum en fonction d'un effort probable de la batterie (104) de véhicule lié à un fonctionnement ultérieur du véhicule électrique (100).

6. Dispositif (102) selon l'une des revendications précédentes, le système de commande (214) étant formé pour lire le signal de quantité (220) provenant d'un système de stockage.

7. Dispositif (102) selon l'une des revendications précédentes, le système d'interrupteur (206) comportant un premier interrupteur (226) de connexion de la borne d'interrupteur (208) à l'interface d'alimentation en courant (113) et le système d'interrupteur (206) étant formé pour fermer le premier interrupteur (226) en utilisant le signal d'activation (215).

8. Dispositif (102) selon l'une des revendications précédentes, dans lequel le système d'interrupteur (206) comporte en outre une interface de charge (210) destinée à injecter de l'énergie électrique (212) dans le dispositif (102), le système de commande (214) étant formé pour fournir un signal onduleur (230) pour convertir une tension continue appliquée sur la première borne (201) en une tension alternative et pour la fournir à la deuxième borne (202) et/ou pour fournir un autre signal d'onduleur (235) pour convertir une tension alternative appliquée sur l'interface de charge (210) en une tension continue et pour la fournir à la première borne (201).

9. Véhicule électrique (100) avec un dispositif (102) selon l'une des revendications précédentes et la batterie (104) de véhicule connectée à l'interface de batterie (111).

10. Procédé (300) de fourniture d'une énergie de charge (AE) pour un autre véhicule électrique (200), le procédé (300) pouvant être utilisé par un véhicule électrique (100) selon la revendication 9 avec un dispositif (102) selon l'une des revendications 1 à 8 et comprenant les étapes suivantes :
conversion (302) d'une tension continue appliquée sur la première borne (201) en une tension alternative et fourniture de la tension alternative à la deuxième borne (202) ;
connexion (304) de la borne d'interrupteur (208) en utilisant le signal d'activation (205), qui est émis lorsqu'un signal de limitation (216) n'indique pas de limitation, à la deuxième borne (202) et à l'interface d'alimentation en courant (113) pour fournir (113) l'énergie de charge (AE) à l'interface d'alimentation en courant (113) pour l'autre véhicule électrique (200), et déconnexion (306) de la borne d'interrupteur (208) de la deuxième borne (202) et de l'interface d'alimentation en courant (113) lorsque le signal de limitation (216) indique une limitation pour ne fournir aucune énergie de charge (AE) à l'interface d'alimentation en courant (113) pour l'autre véhicule électrique (200).

11. Utilisation d'un dispositif (102) disposé dans un véhicule électrique (100) selon l'une des revendications 1 à 8 pour fournir une énergie de charge (AE) pour charger une autre batterie (201) de véhicule d'un autre véhicule électrique (200).
